# DEMANDE DE BREVET EUROPEEN

(11) **EP 2 192 466 A1**
(43) Date de publication de la demande: **02.06.2010**
(21) Numéro de dépôt: 09176594.1
(22) Date de dépôt: 20.11.2009
(51) Int. Cl.: G05D 16/06

(54) **Module élémentaire et dispositif de contrôle d'un flux de gaz et son utilisation**

(30) Priorité: 28.11.2008 FR 0858076
(71) Demandeur: Air Liquide Medical Systems, 92182 Antony Cedex (FR)
(72) Inventeur: Farcy, Laurent, 78000 Versailles (FR); Pin, Fabrice, 78220 Viroflay (FR)
(74) Mandataire: De Cuenca, Emmanuel Jaime

(57) **Abrégé**

Module élémentaire destiné à contrôler un flux de gaz, notamment dans un réseau de gaz, le module (100) comprenant un boîtier (1) pourvu d'un premier orifice d'entrée (10) destiné à accueillir du gaz, un premier orifice de sortie (20) pour le gaz, ledit premier orifice de sortie (20) communiquant fluidiquement directement avec le premier orifice d'entrée (10) via un premier conduit (2) formé dans le boîtier (1), le boîtier (1) étant pourvu en outre d'un second orifice de sortie (21) pour le gaz, ledit second orifice de sortie (21) communiquant fluidiquement avec le premier orifice d'entrée (10) via un second conduit (3) formé dans le boîtier (1), le second conduit (3) étant raccordé en dérivation au premier conduit (2), le second conduit (3) comportant au moins un organe (4) de contrôle du flux de gaz, de sorte que la fraction de gaz entrant dans le boîtier via un premier orifice d'entrée (10) et sortant via le second orifice de sortie (21) est soumis à le au moins un moins un organe (4) de contrôle tandis que la fraction de gaz entrant dans le boîtier via un premier orifice d'entrée (10) et sortant via le premier orifice de sortie (20) n'est pas soumis à le au moins un moins un organe (4) de contrôle, **caractérisé en ce que** le boîtier (1) comporte un second orifice d'entrée (11) destiné à accueillir du gaz, le second orifice d'entrée (11) communiquant fluidiquement directement avec le second orifice de sortie (21) via un troisième conduit (40) formé dans le boîtier (1), le second orifice d'entrée (11) étant raccordé au second orifice de sortie (21) via une portion commune avec le second conduit (3) située en aval du au moins un organe (4) de contrôle, c'est-à-dire que le gaz entrant dans le boîtier via second orifice d'entrée (11) et sortant via le second orifice de sortie (21) n'est pas soumis à le au moins un moins un organe (4) de contrôle.

## Description

La présente invention concerne un module élémentaire de contrôle d'un flux de gaz, un dispositif comprenant plusieurs modules de ce type et son utilisation.

Dans certaines applications de contrôle d'un flux de gaz, notamment dans un réseau de délivrance de gaz, par exemple un réseau hospitalier, il peut être nécessaire de prévoir plusieurs organes de contrôle du gaz en parallèle (par exemple des détendeurs en parallèle). En effet, une installation d'organes de contrôle en parallèle peut être nécessaire pour :
- augmenter un débit nominal de gaz dans l'installation,
- augmenter la sécurité du réseau via des organes redondants disposés en parallèle,
- permettre une maintenance aisée des organes de contrôle sans interrompre le fonctionnement du réseau de gaz.

Disposer des organes de contrôle tels que des détendeurs en parallèle est une technique classique. Cependant, la demanderesse ne connaît aucun dispositif permettant de le réaliser de façon simple, adaptative et peu coûteuse selon des configurations différentes.

Un but de la présente invention est de pallier tout ou partie des inconvénients de l'art antérieur relevés ci-dessus.

A cette fin, le module élémentaire selon l'invention destiné à contrôler un flux de gaz, notamment dans un réseau de gaz, comprend un boîtier pourvu d'un premier orifice d'entrée destiné à accueillir du gaz, un premier orifice de sortie pour le gaz, ledit premier orifice de sortie communiquant fluidiquement directement avec le premier orifice d'entrée via un premier conduit formé dans le boîtier, le boîtier étant pourvu en outre d'un second orifice de sortie pour le gaz, ledit second orifice de sortie communiquant fluidiquement avec le premier orifice d'entrée via un second conduit formé dans le boîtier, le second conduit étant raccordé en dérivation au premier conduit, le second conduit comportant au moins un organe de contrôle du flux de gaz, de sorte que la fraction de gaz entrant dans le boîtier via un premier orifice d'entrée et sortant via le second orifice de sortie est soumis à le au moins un moins un organe de contrôle tandis que la fraction de gaz entrant dans le boîtier via un premier orifice d'entrée et sortant via le premier orifice de sortie n'est pas soumis à le au moins un moins un organe de contrôle.

Par ailleurs, des modes de réalisation de l'invention peuvent comporter l'une ou plusieurs des caractéristiques suivantes :
- le au moins un organe de contrôle comprend au moins l'un parmi : un détendeur de pression, un analyseur de gaz, un filtre, une vanne,
- le au moins un moins un organe de contrôle est monté de façon sélectivement détachable sur le boîtier,
- le boîtier comporte un second orifice d'entrée destiné à accueillir du gaz, le second orifice d'entrée communiquant fluidiquement directement avec le second orifice de sortie via un troisième conduit formé dans le boîtier,
- le second orifice d'entrée est raccordé au second orifice de sortie via une portion commune avec le second conduit située en aval du au moins un organe de contrôle, c'est-à-dire que le gaz entrant dans le boîtier via second orifice d'entrée et sortant via le second orifice de sortie n'est pas soumis à le au moins un moins un organe de contrôle.

L'invention concerne également un dispositif de contrôle d'un flux de gaz notamment dans un réseau de gaz comprenant au moins deux module élémentaires conformes chacun à l'une quelconque des caractéristiques précédentes ou ci-après, les modules élémentaires étant sélectivement raccordés les uns aux autres de façon démontable de façon à former une chaîne de modules ayant une extrémité amont et une extrémité aval, le premier orifice d'entrée du module situé à l'extrémité amont de la chaîne étant destiné à accueillir du gaz à contrôler provenant d'un circuit amont, le second orifice de sortie du module situé à l'extrémité aval étant prévu pour délivrer le gaz contrôlé vers un circuit aval, deux modules élémentaires adjacents de la chaîne étant raccordés de sorte que le premier orifice de sortie du module amont est raccordé fluidiquement au premier orifice d'entrée du module aval adjacent, les organes de contrôle des différents modules raccordés en chaîne étant ainsi disposés en parallèle pour le flux de gaz transitant à travers le dispositif de contrôle.

Par ailleurs, des modes de réalisation de l'invention peuvent comporter l'une ou plusieurs des caractéristiques suivantes:
- au moins deux modules élémentaires adjacents de la chaîne sont raccordés de sorte que tout ou partie des seconds orifices de sortie sont raccordés fluidiquement à un collecteur ou une conduite commune,
- le dispositif comporte au moins un module dont le boîtier comporte un second orifice d'entrée, le second orifice d'entrée communiquant fluidiquement directement avec le second orifice de sortie du même module via un troisième conduit formé dans le boîtier, deux modules élémentaires adjacents de la chaîne étant raccordés de sorte que le second orifice de sortie du module amont est raccordé fluidiquement au second orifice d'entrée du module aval adjacent,
- le boîtier du module situé à l'extrémité amont de la chaîne comporte un second orifice d'entrée, ledit un second orifice d'entrée étant obturé sélectivement par l'un au moins des organes suivants : un bouchon, un manomètre, un capteur de température,
- le premier orifice de sortie du boîtier du module situé à l'extrémité aval de la chaîne est obturé sélectivement par l'un au moins des organes suivants : un bouchon, un manomètre, un capteur de température, un capteur de pression, une sortie supplémentaire,
- les modules élémentaires adjacents sont raccordés (connexions fluidiques entre les orifices) via des organes de liaison fluidiques respectifs sélectivement détachables,
- les organes de liaison fluidiques respectifs sélectivement détachables comprennent au moins un tube dont les extrémités sont sélectivement emboîtables de façon étanche respectivement au niveau d'orifices de modules adjacents,
- les organes de liaison fluidiques coopèrent sélectivement avec les orifices via un système de fixation du type mâle/femelle,
- les organes de liaison fluidiques et/ou les orifices des modules comportent au moins un élément d'étanchéité tel qu'un joint assurant l'étanchéité lors de l'emboîtement sélectif des extrémités des organes de liaison fluidiques au niveau des orifices des modules,
- les organes de liaison fluidiques et les boîtiers comprennent des organes de butés respectifs complémentaires prévus pour coopérer afin de positionner les organes de liaison fluidiques relativement aux boîtiers en position raccordée
- au moins l'un des modules comporte au moins un élément de liaison sélectivement amovible assurant un blocage de l'assemblage entre le boîtier du module et au moins un organe de liaison fluidiques,
- le au moins un élément de liaison comprend un axe tel qu'une vis destiné à coopérer sélectivement avec d'une part une portion du boîtier et avec une portion d'au moins un organe de liaison fluidiques,
- l'axe de liaison coopère sélectivement simultanément d'une part avec un trou formé du boîtier et, d'autre part, avec un épaulement formé sur un organe de liaison fluidique et de préférence avec les épaulements respectifs de deux organes de liaison fluidiques adjacents,
- l'axe de liaison coopère sélectivement simultanément avec un passage conjugué formé sur une platine formant un support pour le boîtier,

L'invention peut concerner également l'utilisation d'un dispositif de contrôle d'un flux de gaz selon l'une quelconque des caractéristiques ci-dessus ou ci-dessous dans un réseau de gaz en vue de la réalisation d'une détente prédéterminée du gaz comprenant
- une étape d'assemblage d'au moins deux modules dans lequel chaque module comprend un organe de contrôle constitué d'un détendeur de pression,
- une étape connexion fluidique du dispositif de contrôle avec d'une part un circuit amont de gaz à détendre et, d'autre part, avec un circuit aval de gaz détendu, ledit gaz à détendre étant acheminé du circuit amont au dispositif de contrôle via le premier d'entrée du module situé à l'extrémité amont de la chaîne, le gaz détendu délivré au circuit aval étant prélevé via un ou des orifices de sortie du module situé à l'extrémité aval de la chaîne.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant un exemple de structure possible d'un module élémentaire destiné à contrôler un flux de gaz selon l'invention,
- la figure 2 représente une vue en coupe longitudinale schématique d'un exemple de dispositif de contrôle d'un flux de gaz selon l'invention composé de quatre modules élémentaires raccordés fluidiquement,
- la figure 3 représente une vue schématique illustrant un exemple de dispositif de contrôle d'un flux de gaz selon l'invention composé de quatre modules élémentaires raccordés fluidiquement,
- la figure 4 représente une vue en coupe transversale d'un module élémentaire d'un dispositif de contrôle d'un flux,
- la figure 5 représente une vue en coupe longitudinale d'un exemple de dispositif de contrôle d'un flux de gaz selon l'invention composé de quatre modules élémentaires en position démontée,
- la figure 6 représente une vue schématique illustrant un autre exemple de dispositif de contrôle d'un flux de gaz selon l'invention composé de trois modules élémentaires,
- la figure 7 représente une vue en perspective et partielle d'un exemple de dispositif de contrôle d'un flux de gaz selon l'invention composé de trois modules élémentaires raccordés fluidiquement.

L'invention propose un système de contrôle de gaz à géométrie variable permettant d'adapter un dispositif de contrôle de gaz aux exigences du réseau dans lequel il devra être placé (nombre d'organes de contrôle, débit, ...).

Dans la description ci-après, l'invention sera illustrée avec des dispositifs de contrôle constitués de détendeurs. Bien entendu, l'invention peut s'appliquer également pour associer en parallèle d'autres des sous-ensembles ou organes de contrôle ayant une action sur un gaz (analyseurs de gaz de types variés, filtres, vannes ...). De même chaque module peut comporter plusieurs organes 4 de contrôle identiques ou distincts en série. Le ou les organes 4 de contrôle peuvent être montés de façon sélectivement détachable sur un boîtier 1 du module 100.

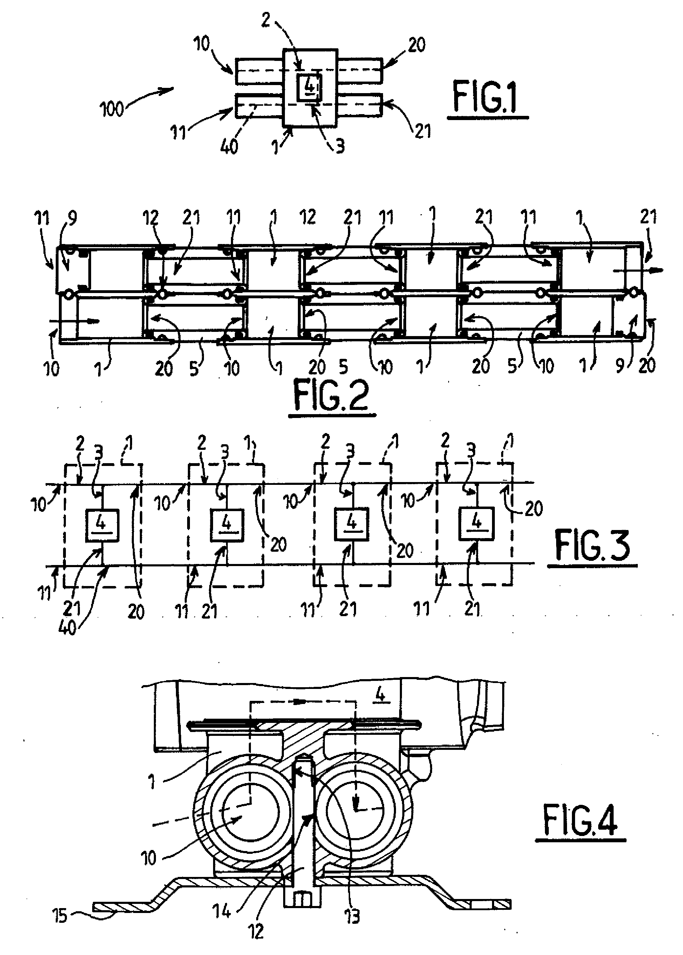

Le module élémentaire 100 illustré à la figure 1 comprend un boîtier 1 comprenant un détendeur 4. Le boîtier 1 est pourvu d'un premier orifice d'entrée 10 destiné à accueillir du gaz et un premier orifice de sortie 20 pour le gaz. Le premier orifice de sortie 20 est relié fluidiquement directement avec le premier orifice d'entrée 10 via un premier conduit 2 formé dans le boîtier 1. C'est-à-dire que du gaz entrant dans le boîtier 1 via le premier orifice d'entrée peut circuler librement dans le premier conduit 2 vers le premier orifice de sortie 20 sans subir l'action du détendeur 4.

Le boîtier 1 comprend en outre un second orifice de sortie 21 pour le gaz. Le second orifice de sortie 21 communiquant fluidiquement avec le premier orifice d'entrée 10 via un second conduit 3 formé dans le boîtier 1. Le second conduit 3 peut être raccordé en dérivation au premier conduit 2. Le second conduit 3 fait transiter le gaz via le détendeur 4. C'est à dire que du gaz entrant dans le boîtier via premier orifice d'entrée 10 et sortant via le second orifice de sortie 21 subit l'action du détendeur 4.

Le boîtier 1 comporte en outre de préférence un second orifice d'entrée 11 destiné à accueillir du gaz. Ce second orifice d'entrée 11 communique fluidiquement directement avec le second orifice de sortie 21 via un troisième conduit 40 formé dans le boîtier 1. Le second orifice d'entrée 11 peut être raccordé au second orifice de sortie 21 via une portion commune avec le second conduit 3, en aval du détendeur 4. C'est-à-dire que le gaz entrant dans le boîtier 1 via second orifice d'entrée 11 peut sortir via le second orifice de sortie 21 sans être soumis à l'action du détendeur 4.

Deux ou plusieurs modules 100 peuvent être reliés les uns aux autres en chaîne de façon amovible pour disposer les détendeurs 4 des modules 100 en parallèle pour le gaz destiné à transiter via la chaîne de modules 100.

Les figures 2 et 3 illustrent chacun un dispositif de contrôle d'un flux de gaz formé par l'association de quatre modules élémentaires 100 formant une chaîne ayant une extrémité amont (par exemple à gauche sur les figures) et une extrémité aval (par exemple à droite sur les figures).

Le premier orifice d'entrée 10 du module 100 situé à l'extrémité amont de la chaîne est prévu pour être relié fluidiquement à un circuit de gaz amont (non représenté).

Le second orifice de sortie 21 du module 100 situé à l'extrémité aval est destiné à être relié fluidiquement à un circuit aval.

Entre ces deux extrémités amont et aval, le premier orifice de sortie 20 d'un module 100 amont est raccordé fluidiquement au premier orifice d'entrée 10 du module 100 adjacent situé immédiatement en aval. De même, le second orifice de sortie 21 du module 100 amont est raccordé fluidiquement au second orifice d'entrée 11 du module 100 aval immédiatement adjacent.

Le second orifice 11 d'entrée du boîtier 1 du module 100 situé à l'extrémité amont de la chaîne n'est pas forcément utilisé. Cet orifice 11 peut être obturé sélectivement par l'un au moins des organes suivants : un bouchon 9, un manomètre, un capteur de température, un capteur de pression, une entrée supplémentaire.

De même, le premier orifice 20 de sortie du boîtier 1 du module 100 situé à l'extrémité aval de la chaîne n'est pas forcément utilisé. Cet orifice peut être obturé sélectivement par l'un au moins des organes suivants : un bouchon 9, un manomètre, un capteur de température, un capteur de pression, une sortie supplémentaire. Ainsi, les entrées/sorties de la chaîne de modules 100 qui ne sont pas utilisées peuvent être soient simplement fermées par des bouchons, soit être utilisées pour connecter des appareils qui nécessitent un apport de fluide, l'un de fluide non détendu (à l'extrémité amont), l'autre de fluide détendu (à l'extrémité aval). De préférence, le premier orifice de sortie 20 du boîtier 1 situé à l'extrémité en aval de la chaîne de boîtier est fermé ou connecté à un organe de façon à contraindre le gaz à passer via le réseau de détendeurs 4 disposés en parallèle.

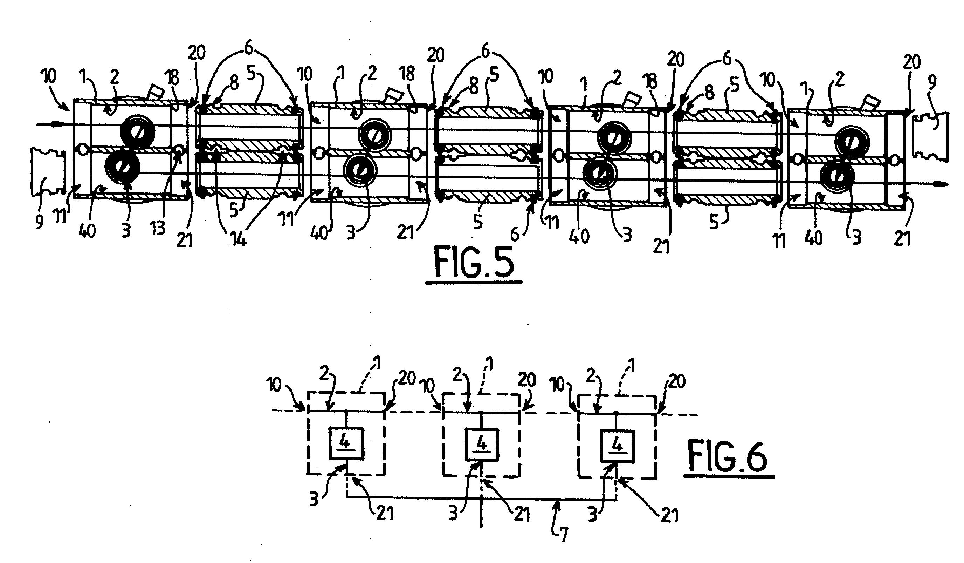

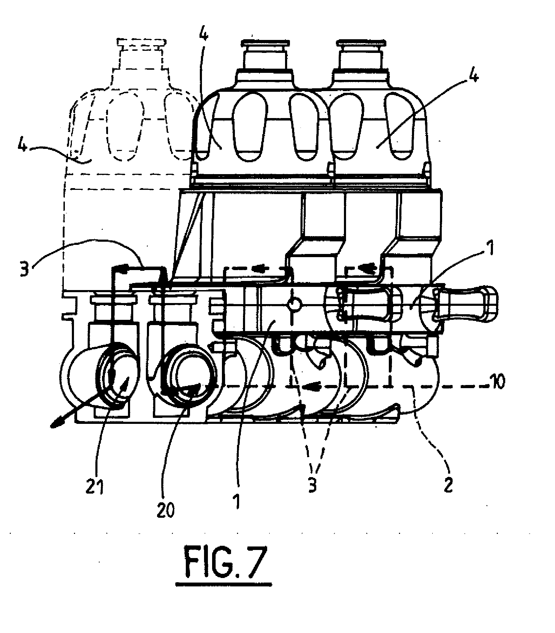

La liaison ou raccord fluidique entre un orifice de sortie 20, 21 d'un boîtier 1 de module 100 avec un orifice d'entrée 10, 11 d'un boîtier 1 d'un module 100 adjacent peut être réalisée via un organe 5 de liaison fluidique sélectivement détachable, par exemple un tube 5 (cf. figures 2 et 5). Il fut cependant noter que, par soucis de simplification, la vue de la figure 2 n'illustre pas le détendeur de chaque module 100. Ce détendeur 4 peut être situé dans un plan transversal au plan de coupe. Le gaz transitant par le détendeur peut notamment emprunter une portion transversale aux conduits 2, 40. C'est à dire que le second conduit emprunte par exemple une portion perpendiculaire au plan de la chaîne de modules 100 (cf. également figures 4 et 7).

Par exemple, les extrémités du tube 5 sont sélectivement emboîtables de façon étanche respectivement au niveau de deux orifices de modules (100) adjacents. De préférence, le tube 5 coopèrent sélectivement avec les orifices 10, 11, 20, 21 via un système de fixation du type mâle/femelle. A cet effet, le tube 5 peut comporter à chacune de ses extrémités une gorge contenant un joint torique d'étanchéité destiné à coopérer avec un orifice du boîtier 1 (bien sûr, un joint de tout type peut être prévu alternativement ou cumulativement au niveau de l'orifice concerné du boîtier). De préférence, le tube 5 comporte une augmentation de diamètre en aval de cette gorge de joint 6 pour venir en butée sur un profil femelle de l'orifice. En aval de cette augmentation de diamètre, le tube 5 peut comporter une gorge 14 de forme générale circulaire ou semi-circulaire. Cette gorge 14 peut être prévue pour coopérer avec un axe 12 de fixation tel que décrit ci-après.

De préférence également les extrémités des tubes 5 et/ou les orifices des boîtiers 1 (ou toute autre partie du boîtier 1) peuvent comporter des organes de butés 8, 18 respectifs prévus pour coopérer afin de positionner précisément les tubes 5 dans les orifices en position raccordée (cf. figure 5, par exemple une gorge 8 coopérant avec une saillie 18 pour assurer un maintien par déformation élastique tel qu'un clip).

Comme représenté, les deux orifices d'entrée 10, 11 d'un boîtier 1 peuvent être adjacent d'un côté du boîtier. De même, les deux orifices de sortie 20, 21 d'un boîtier 1 peuvent être adjacent d'un autre côté du boîtier. On peut également envisager de prévoir d'autres répartitions. De même, deux tubes 5 peuvent être rendus solidaires pour diminuer le nombre de pièces et les opérations de montage/démontage.

On comprend aisément que le système permet d'obtenir différentes géométries avec des pièces élémentaires (modules 100 et tubes 5). Les orifices de chaque boîtier 1 peuvent avoir des utilisations différentes (entrées/sorties) selon la configuration et l'utilisation du dispositif.

Le dispositif peut comporter également un élément 12 de liaison sélectivement amovible assurant un blocage de l'assemblage entre le boîtier 1 du module 100 et au moins un tube 5. Par exemple une vis peut être prévue pour assurer la fixation sélective entre d'une part le boîtier 1 et, d'autre part un et de préférence deux tubes 5.

La vis 12 peut s'engager par exemple dans un trou 13 formé dans une paroi boîtier 1. La vis peut assurer un blocage d'un ou de deux tubes en coopérant avec un épaulement 14 formé sur les tubes 5.

Avantageusement, la vis 12 peut simultanément coopérer sélectivement avec un trou 15 ou un logement conjugué formé sur une platine 15 formant un support pour le boîtier 1 (cf. figure 4). Comme représenté à la figure 5, on peut prévoir deux vis par boîtier 1, pour solidariser mécaniquement respectivement les deux paires de tubes 5 coopérant avec les deux paires d'orifices10, 11 ; 20, 21. Comme représente, la vis 12 peut venir se placer transversalement à la direction des tubes 5.

La vis 12 permet ainsi un maintien de deux des quatre tubes 5 reliés aux entrées/sortie d'un module. Ainsi, seuls deux vis 12 (ou axes ou équivalent) suffisent donc pour maintenir les quatre tubes 5 d'un boîtier 1. La même vis 12 peut même être utilisée pour la fixation du module 100 sur un support (via par exemple une platine 15). Avantageusement la vis 12 est située en dehors de la zone d'étanchéité (pas de contact avec le gaz sans circulant dans la chaîne).

Le module 100 élémentaire et le dispositif composé de plusieurs modules 100 possède ainsi deux lignes de fluide distinctes, parallèles, l'une véhiculant le fluide non détendu (sans passer par le ou les détendeurs 4) et l'autre véhiculant le fluide détendu (passant par le ou les détendeurs 4), cf. figures 3 et 5 notamment.

Les flèches de circulations du gaz représentées à titre symbolique aux figures 2, 5 et 7 sont purement indicatives. En effet, selon les applications et configurations, le gaz non détendu peut de la même manière que le fluide détendu entrer indifféremment de l'un ou de l'autre côté du boîtier 1.

Cette structure permet donc de créer une multitude de combinaisons de détendeurs en parallèle. Dans le cas où deux (ou plus) détendeurs 4 en parallèle sont nécessaires dans un réseau (par exemple pour des besoins en débit, en raison d'une norme, pour des questions de sécurité), il suffit de relier le nombre correspondant de modules via les tubes 12. Cette structure peut être reproduite à l'infini, permettant un nombre non limité de détendeurs en parallèles (hors considérations d'encombrement et d'utilité).

L'orifice d'entrée de gaz 10 du module 100 situé à l'extrémité amont de la chaîne peut être relié facilement à un réseau amont. Par exemple, il est juste nécessaire de prévoir un organe de connexion compatible avec ledit orifice 10. Ainsi, dans le cas par exemple d'une utilisation pour un réseau de gaz, on peut utiliser un raccord à braser sur canalisations cuivre, ou un raccord à bagues pour canalisations cuivre, ou tout autre système approprié. Il en est de même pour le raccord de l'orifice de sortie 20 du module 100 situé à l'extrémité aval à un réseau aval.

On comprend aisément que ces modules de détente interconnectables permettent, avec une seule référence, de réaliser un nombre important de combinaisons, en fonction des besoins de chaque utilisation.

Selon d'autres avantages possibles :
- on peut augmenter le débit nominal de gaz contrôlé par le dispositif sans recourir à des appareils différents pour chaque configuration ou différents pour chaque débit,
- il n'est pas nécessaire d'utiliser des appareils très volumineux,
- le dispositif est adaptatif en fonction du besoin initiale et évolutif si le besoin (détendeurs, débit...) change au cours de la vie de l'appareil complet,
- on peut augmenter la sécurité du réseau avec des appareils redondants,
- on réalise des gains économiques en utilisant un module élémentaire et des pièces standard.

Dans le cas où le détendeur 4 (ou autre organe) est sélectivement remplaçable sur le boîtier 1 (cf. par exemple le document EP1217489), on peut en outre prévoir des détendeurs de réserve soit déjà connectés sur le boîtier 1, soit déjà en fonctionnement. Par exemple, deux détendeurs 4 peuvent être connectés ou fixés mécaniquement, mais un seul seulement peut être activé ou utilisé (en fonctionnement) tandis que l'autre détendeur est en attente d'activation en cas de secours (défaillance du détendeur utilisé par exemple).

L'invention peut notamment être utilisée dans une unité de détente murale hospitalière (norme NF EN ISO 7396-1).

Bien entendu, l'invention n'est pas limitée aux exemples décrits ci-dessus. La figure 6 illustre notamment une variante dans laquelle chaque boîtier de module 10 comporte trois orifices 10, 20, 21 (au lieu de quatre). C'est-à-dire que le boîtier 1 de la figure 6 ne comporte pas de second orifice d'entrée. Dans ce cas, le premier orifice de sortie 20 du boîtier 1 situé à l'extrémité aval de la chaîne de boîtiers est de préférence refermé par un bouchon (non représenté). Les seconds orifices 21 de sortie des modules adjacents sont reliés fluidiquement. Par exemple, les modules élémentaires adjacents de la chaîne sont raccordés de sorte que tout ou partie des seconds orifices de sortie 21 sont raccordés fluidiquement à un collecteur ou une conduite (3, 40 ;7) commune (en une ou plusieurs pièces). C'est-à-dire que le gaz soumis aux détendeurs 4 en parallèle est récolté à partir des seconds orifices 21 de sortie.

## Revendications

1. Module élémentaire destiné à contrôler un flux de gaz, notamment dans un réseau de gaz, le module (100) comprenant un boîtier (1) pourvu d'un premier orifice d'entrée (10) destiné à accueillir du gaz, un premier orifice de sortie (20) pour le gaz, ledit premier orifice de sortie (20) communiquant fluidiquement directement avec le premier orifice d'entrée (10) via un premier conduit (2) formé dans le boîtier (1), le boîtier (1) étant pourvu en outre d'un second orifice de sortie (21) pour le gaz, ledit second orifice de sortie (21) communiquant fluidiquement avec le premier orifice d'entrée (10) via un second conduit (3) formé dans le boîtier (1), le second conduit (3) étant raccordé en dérivation au premier conduit (2), le second conduit (3) comportant au moins un organe (4) de contrôle du flux de gaz, de sorte que la fraction de gaz entrant dans le boîtier via un premier orifice d'entrée (10) et sortant via le second orifice de sortie (21) est soumis à le au moins un moins un organe (4) de contrôle tandis que la fraction de gaz entrant dans le boîtier via un premier orifice d'entrée (10) et sortant via le premier orifice de sortie (20) n'est pas soumis à le au moins un moins un organe (4) de contrôle, **caractérisé en ce que** le boîtier (1) comporte un second orifice d'entrée (11) destiné à accueillir du gaz, le second orifice d'entrée (11) communiquant fluidiquement directement avec le second orifice de sortie (21) via un troisième conduit (40) formé dans le boîtier (1), le second orifice d'entrée (11) étant raccordé au second orifice de sortie (21) via une portion commune avec le second conduit (3) située en aval du au moins un organe (4) de contrôle, c'est-à-dire que le gaz entrant dans le boîtier via second orifice d'entrée (11) et sortant via le second orifice de sortie (21) n'est pas soumis à le au moins un moins un organe (4) de contrôle.

2. Module élémentaire (100) selon la revendication 1, **caractérisé en ce que** le au moins un organe (4) de contrôle comprend au moins l'un parmi : un détendeur de pression, un analyseur de gaz, un filtre, une vanne.

3. Dispositif de contrôle d'un flux de gaz notamment dans un réseau de gaz comprenant au moins deux module élémentaires (100) conformes chacun à l'une quelconque des revendications 1 à 2, les modules élémentaires (100) étant sélectivement raccordés les uns aux autres de façon démontable de façon à former une chaîne de modules (100) ayant une extrémité amont et une extrémité aval, le premier orifice d'entrée (10) du module (100) situé à l'extrémité amont de la chaîne étant destiné à accueillir du gaz à contrôler provenant d'un circuit amont, le second orifice de sortie (21) du module situé à l'extrémité aval étant prévu pour délivrer le gaz contrôlé vers un circuit aval, deux modules (100) élémentaires adjacents de la chaîne étant raccordés de sorte que le premier orifice de sortie (20) du module (100) amont est raccordé fluidiquement au premier orifice d'entrée (10) du module (100) aval adjacent, les organes (4) de contrôle des différents modules raccordés en chaîne étant ainsi disposés en parallèle pour le flux de gaz transitant à travers le dispositif de contrôle, deux modules (100) élémentaires adjacents de la chaîne étant raccordés de sorte que le second orifice de sortie (21) du module (100) amont est raccordé fluidiquement au second orifice d'entrée (11) du module (100) aval adjacent, le boîtier (1) du module (100) situé à l'extrémité amont de la chaîne comportant un second orifice d'entrée (11), ledit un second orifice d'entrée (11) étant obturé sélectivement par l'un au moins des organes suivants : un bouchon (9), un manomètre, un capteur de température.

4. Dispositif de contrôle selon la revendication 3, **caractérisé en ce qu'**au moins deux modules (100) élémentaires adjacents de la chaîne sont raccordés de sorte que tout ou partie des seconds orifices de sortie (21) sont raccordés fluidiquement à un collecteur ou une conduite (3, 40 ;7) commune.

5. Dispositif de contrôle selon la revendication 4, **caractérisé en ce que** le premier orifice (20) de sortie du boîtier (1) du module (100) situé à l'extrémité aval de la chaîne est obturé sélectivement par l'un au moins des organes suivants : un bouchon (9), un manomètre, un capteur de température, un capteur de pression, une sortie supplémentaire.

6. Dispositif de contrôle selon l'une quelconque des revendications 3 à 5, **caractérisé en ce que** les modules (100) élémentaires adjacents sont raccordés (connexions fluidiques entre les orifices) via des organes (5) de liaison fluidiques respectifs sélectivement détachables, comprenant au moins un tube dont les extrémités sont sélectivement emboîtables de façon étanche respectivement au niveau d'orifices (10, 11, 21, 20) de modules (100) adjacents.

7. Dispositif selon la revendication 6, **caractérisé en ce que** chaque binôme d'orifices (20,10 ; 21,11) qui sont en communication fluidique et qui appartiennent respectivement à deux modules adjacents (100) sont raccordés via un tube (5).

8. Dispositif selon la revendication 7, **caractérisé en ce que** chaque extrémité de chaque tube (5) comporte une gorge (8) prévue pour coopérer avec une saillie complémentaire formée dans l'orifice du boîtier pour former un maintien par déformation élastique.

9. Dispositif selon la revendication 6 ou 7, **caractérisé en ce que** chaque extrémité de chaque tube (5) comporte une gorge dans laquelle est logé un joint torique d'étanchéité destiné à coopérer en butée avec un siège complémentaire formé dans l'orifice du boîtier.

10. Dispositif selon l'une quelconque des revendications 6 à 9, **caractérisé en ce que** chaque extrémité de chaque tube (5) comporte une augmentation de diamètre prévu pour venir en butée de positionnement indexé sur le boîtier.

11. Dispositif de contrôle selon la revendication 6 ou 9, **caractérisé en ce qu'**au moins l'un des modules (100) comporte au moins un élément (12) de liaison sélectivement amovible assurant un blocage de l'assemblage entre le boîtier (1) du module (100) et au moins un organe (5) de liaison fluidiques.

12. Dispositif de contrôle selon la revendication 11, **caractérisé en ce que** le au moins un élément (12) de liaison comprend un tel axe qu'une vis destiné à coopérer sélectivement avec d'une part une portion (13) du boîtier (1) et avec une portion (14) d'au moins un organe (5) de liaison fluidiques.

13. Dispositif de contrôle selon la revendication 12, **caractérisé en ce que** l'axe (12) de liaison coopère sélectivement simultanément d'une part avec un trou (13) formé du boîtier (1) et, d'autre part, avec un épaulement formé sur un organe (5) de liaison fluidique et de préférence avec les épaulements respectifs de deux organes (5) de liaison fluidiques adjacents..

14. Dispositif de contrôle selon la revendication 12 ou 13, **caractérisé en ce que** l'axe (12) de liaison coopère sélectivement simultanément avec un passage (15) conjugué formé sur une platine (15) formant un support pour le boîtier (1).

15. Utilisation d'un dispositif de contrôle d'un flux de gaz selon l'une quelconque des revendications 3 à 14 dans un réseau de gaz en vue de la réalisation d'une détente prédéterminée du gaz comprenant :
- une étape d'assemblage d'au moins deux modules (100) dans lequel chaque module (100) comprend un organe (4) de contrôle constitué d'un détendeur de pression,
- une étape connexion fluidique du dispositif de contrôle avec d'une part un circuit amont de gaz à détendre et, d'autre part, avec un circuit aval de gaz détendu, ledit gaz à détendre étant acheminé du circuit amont au dispositif de contrôle via le premier d'entrée (10) du boîtier du module situé à l'extrémité amont de la chaîne, le gaz détendu délivré au circuit aval étant prélevé via un ou des orifices de sortie (20, 21) du boîtier du module (100) situé à l'extrémité aval de la chaîne.
